## Europäisches Patentamt
## European Patent Office
## Office européen des brevets

(19)

(11) Numéro de publication: **0 085 948**
**B1**

(12)

# FASCICULE DE BREVET EUROPEEN

(45) Date de publication du fascicule du brevet:
**04.12.85**

(51) Int. Cl.⁴: **H 01 S 3/03**

(21) Numéro de dépôt: **83101001.2**

(22) Date de dépôt: **03.02.83**

(54) Générateur laser guide d'onde.

(30) Priorité: **09.02.82 FR 8202064**

(43) Date de publication de la demande:
**17.08.83 Bulletin 83/33**

(45) Mention de la délivrance du brevet:
**04.12.85 Bulletin 85/49**

(84) Etats contractants désignés:
**DE FR GB NL**

(56) Documents cités:
**DE - A - 2 550 677**
**FR - A - 2 314 601**
**GB - A - 2 071 904**

**JOURNAL OF PHYSICS D, APPLIED PHYSICS, vol. 11, no. 8, juin 1978, pages L111-L113, Letchworth, Hertfordshire, GB., D.V. WILLETTS et al.: "An anodised aluminium waveguide CO2 laser"**
**REVIEW OF SCIENTIFIC INSTRUMENTS, vol. 52, no. 3, mars 1981, pages 482-483, New York, USA, S. MARCUS: "Compact electrooptically Q-switched CO2 waveguide laser"**
**IEEE JOURNAL OF QUANTUM ELECTRONICS, vol. QE-18, no. 1, janvier 1982, pages 87-90, IEEE, New York, USA, G. SCHÄFER et al.: "Tunable CO2 waveguide laser with high transverse mode and line discrimination"**

(73) Titulaire: **COMPAGNIE GENERALE D'ELECTRICITE Société anonyme dite:, 54, rue La Boétie, F-75382 Paris Cedex 08 (FR)**

(72) Inventeur: **Le Goff, Denis, 21 Clos de La Fontaine, F-78210 Saint-Cyr-l'Ecole (FR)**

(74) Mandataire: **Weinmiller, Jürgen et al, Zeppelinstrasse 63, D-8000 München 80 (DE)**

## Description

La présente invention concerne un générateur laser guide d'onde.

On connaît un générateur laser de ce type, comportant

— une cavité optique résonnante disposée suivant un axe,
— un canal capilaire en céramique disposé coaxialement dans la cavité, ce canal étant obturé à ses extrémités et contenant un gaz actif laser,
— un réservoir du gaz actif en communication avec le canal,
— au moins deux électrodes en contact avec le gaz actif contenu dans le canal
— et un générateur de courant électrique dont les bornes peuvent être connectées aux électrodes pour exciter le gaz actif dans le canal et créer un faisceau laser sortant de la cavité.

Le réservoir, de forme cylindrique, est généralement réalisé en verre ou en métal et disposé à proximité du canal (voir p.ex. l'article de S. Marcus, »Compact electrooptically Q-switched $CO_2$ waveguide laser«, paru dans »Review of Scientific«, Instruments, Vol. 52 (1981), pages 482—483).

La liaison entre le réservoir et le canal s'effectue par des tubulures en verre ou en métal, solidaires du réservoir. Ces tubulures aboutissent dans des ouvertures ménagées dans la paroi latérale du canal et sont fixées dans ces ouvertures par des brasures. Il est possible d'obtenir ainsi des durées de fonctionnement de générateur laser supérieures à 2000 heures.

Le générateur laser guide d'onde décrit ci-dessus présente l'inconvénient d'être fragile, relativement encombrant et de fabrication délicate.

La présente invention a pour but de pallier cet inconvénient.

Elle a pour objet un générateur laser guide d'onde, du type spécifié ci-dessus, caractérisé en ce que

— le réservoir comporte un tube cylindrique en céramique obturé à ses extrémités, la surface cylindrique extérieure du tube comportant un élément de surface aplati s'étendant longitudinalement entre deux génératrices de cette surface cylindrique extérieure, cet élément comportant extérieurement une première rainure parallèle à l'axe du tube, une partie de la surface de cette première rainure formant une partie de la surface interne du canal,
— et que le générateur comporte en outre

. une réglette plate en céramique comportant longitudinalement une deuxième rainure
. et des moyens pour fixer de manière étanche au gaz la réglette sur l'élément de surface aplati du tube, de façon que la deuxième rainure soit opposée à la première rainure et forme l'autre partie de la surface interne du canal capillaire, au moins un orifice étant ménagé à travers la paroi du tube dans la première rainure pour mettre en communication les volumes internes du canal et du tube.

Des formes particulières d'exécution de l'objet de la présente invention sont décrites ci-dessous, à titre d'exemple, en référence aux dessins annexés, dans lesquels

— la figure 1 est une vue partielle, éclatée, dans l'espace, d'un mode de réalisation du générateur laser selon l'invention,
— la figure 2 représente l'ensemble du générateur laser illustré partiellement par la figure 1,
— la figure 3 est une vue en coupe transversale du générateur laser illustré par la figure 2,
— la figure 4 représente une partie IV de la figure 3, à plus grande échelle
— et la figure 5 représente partiellement un autre mode de réalisation du générateur laser selon l'invention.

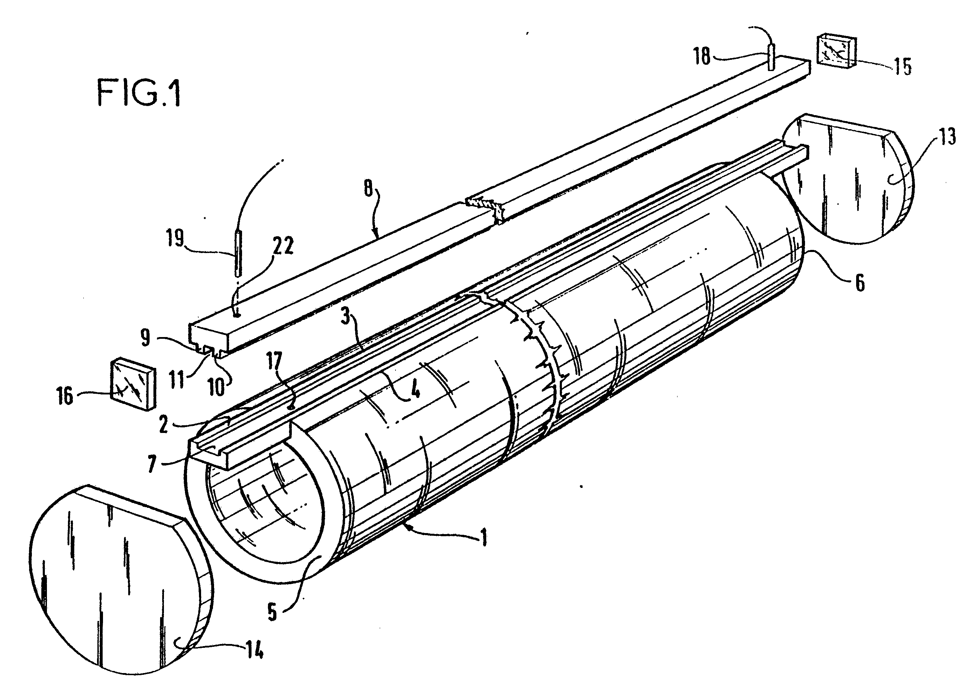

Sur la figure 1, est représenté un tube cylindrique 1 en céramique, par exemple en alumine. La surface cylindrique extérieure du tube 1 comporte un élément de surface aplati 2 s'étendant, entre deux génératrices 3 et 4 de cette surface cylindrique extérieure, sur toute la longueur du tube et au delà des extrémités 5 et 6 du tube. L'élément de surface 2 comporte une rainure 7 à section rectangulaire, parallèle à l'axe du tube 1. Une réglette plate 8 en alumine a la même longueur que l'élément de surface 2. La réglette 8 comporte sur une de ses faces principales deux saillies 9 et 10 longitudinales à section rectangulaires formant entre elles une autre rainure 11.

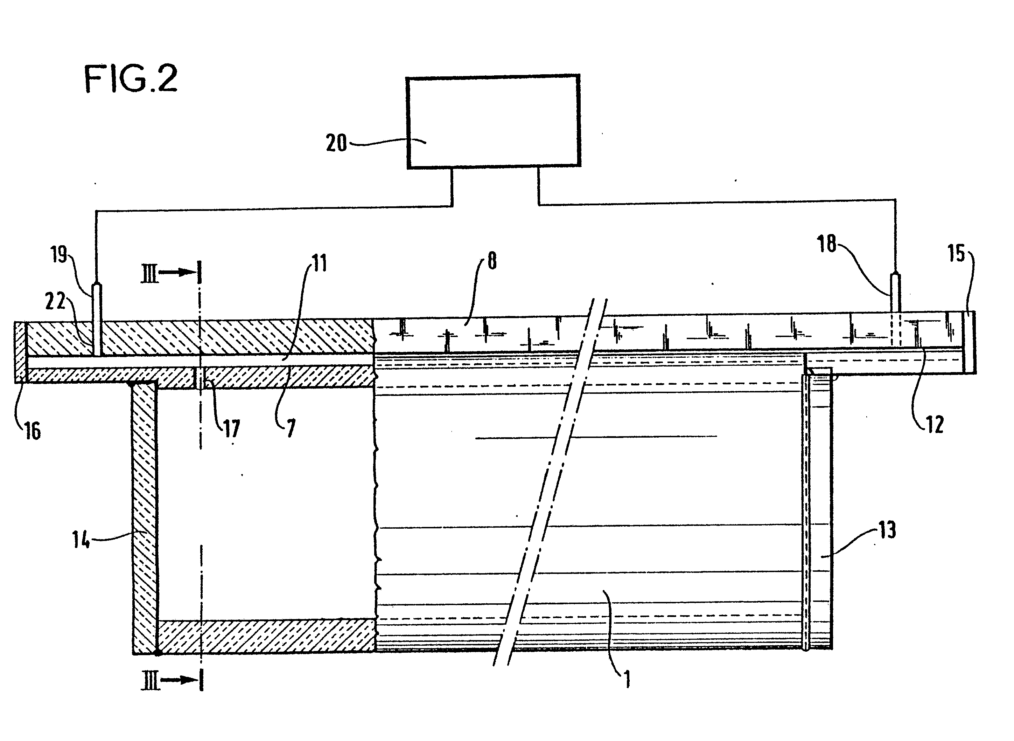

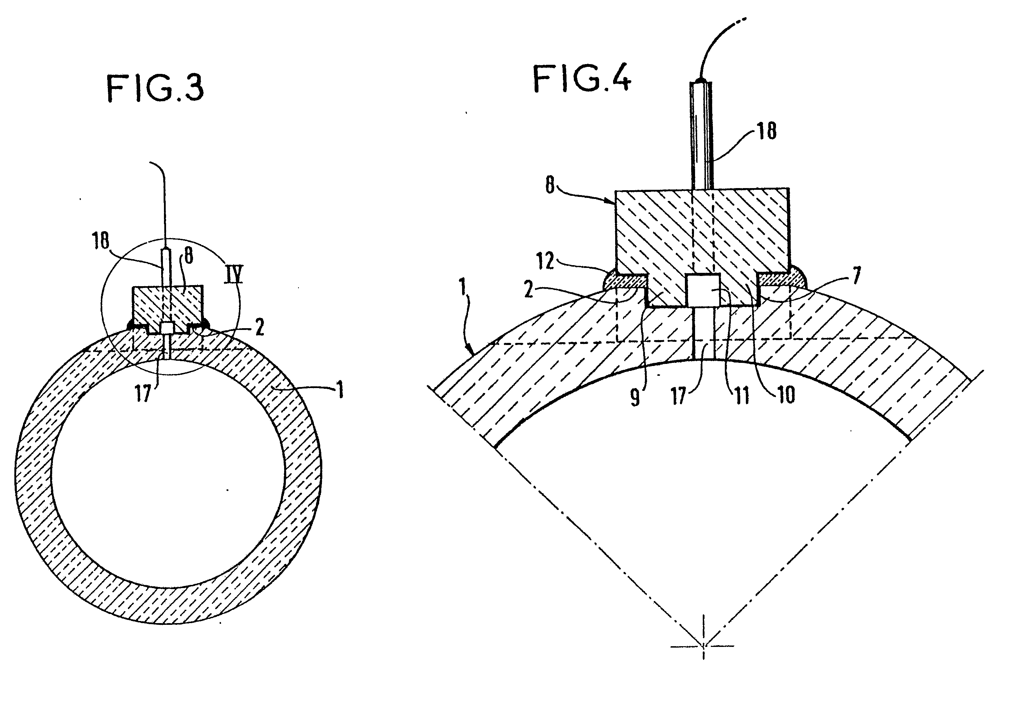

La réglette 8 est fixée sur l'élément de surface 2 comme montré sur les figures 2, 3 et 4: les saillies 9 et 10 sont enfoncées dans la rainures 7, de façon que leurs bords longitudinaux soient en contact et que la rainure 11 soit opposée à la rainure 7. L'élément de surface aplati 2 et la réglette 8 forment alors un canal capillaire à section rectangulaire, dont une partie de la surface interne est constituée par la rainure 11 et l'autre partie par le fond de la rainure 7. La réglette 8 est réalisée de façon qui'il subsiste extérieurement, après fixation, un espace compris entre les surfaces planes en regard de la réglette et de l'élément 2. Cet espace est rempli d'une brasure 12 au verre par exemple, afin de réaliser l'étanchéité aux gas (voir figure 4).

Deux plaquettes en alumine 13 et 14 sont fixées par une brasure au verre sur les extrémités 5 et 6 du tube 1 pour les obturer et former un réservoir. Ce réservoir comporte en outre une vanne de remplissage non visible sur les figures.

Deux réflecteurs en germanium 15 et 16 sont fixés par collage aux extrémités du canal capillaire pour obturer ces extrémités et former une cavité optique résonnante dont l'axe coïncide avec celui du canal.

Un orifice 17 est ménagé à travers la paroi du tube 1 dans la rainure 7 pour mettre en communication les volumes internes du réservoir et du canal.

Deux tiges métalliques 18 et 19 en cuivre, dont les extrémités sont fixées dans deux ouvertures telles que 22 disposées aux extrémités de la plaquette 8 forment deux électrodes en contact avec le volume interne du canal capillaire. La fixation des tiges 18 et 19 dans la plaquette 8 peut s'effectuer par brasure.

Les électrodes sonst connectées aux deux bornes d'un générateur électrique 20 (voir fig. 2).

Le générateur laser illustré par les figures 1 à 4 fonctionne de la manière suivante.

Après montage des différents éléments du laser comme indiqué ci-dessus, on fait le vide dans les volumes intérieurs du réservoir et du canal et on les remplit d'un gaz actif laser par la vanne de remplissage. Ce gaz actif peut être par exemple un mélange de gaz carbonique, d'hélium et d'azote.

Dès que le générateur 20 est connecté aux électrodes 18 et 19, le gaz actif contenu dans le canal capillaire est excité, ce qui entraîne la formation d'un faisceau laser de longueur d'onde 10,6 microns sortant de la cavité par un des réflecteurs 15 et 16, partiellement transparent.

Ce laser guide d'onde est particulièrement compact et robuste puisque le canal laser est fixé solidement au réservoir sur toute la longueur de l'élément de surface aplati du tube 1. De plus la fixation de la réglette 8 sur le tube 1 s'effectue facilement par une brasure au verre par exemple.

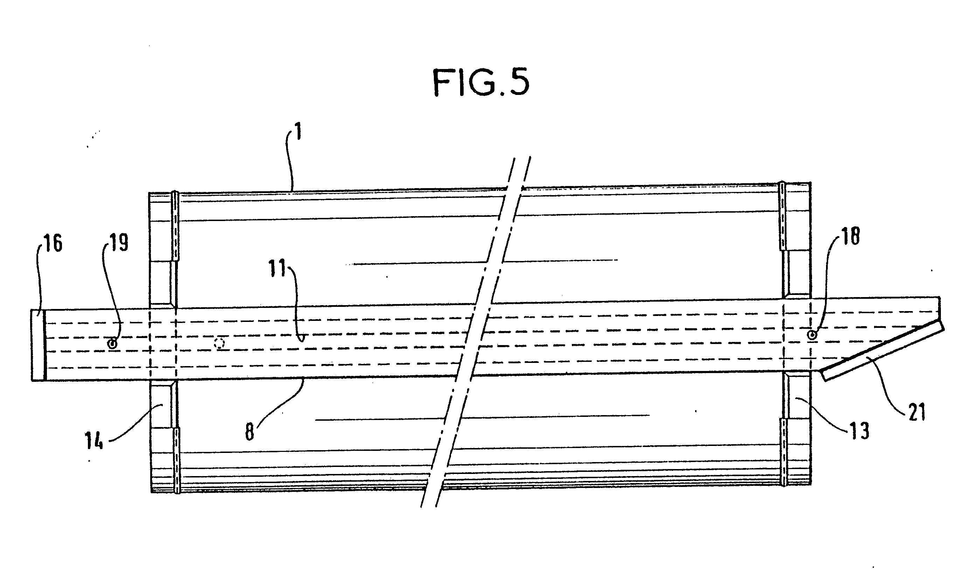

La figure 5 représente un autre mode de réalisation de laser guide d'onde, comportant des éléments identiques à ceux du laser illustré par les figures 1 à 4, ces éléments étant repérés par les mêmes références numériques. Dans le laser de la figure 5, une des extrémités du canal capillaire est obturée par une fenêtre transparente 21 disposée à l'incidence de Brewster. Un tel laser comporte en outre un réflecteur non représenté disposé suivant l'axe du canal, mais à l'extérieur du canal, en regard de la fenêtre 21. La cavité optique résonnante est délimitée par ce réflecteur et le réflecteur 16 obturant l'autre extrémité du canal.

Dans ce mode de réalisation, le réflecteur situé à l'extérieur du canal peut être constitué par un réseau optique, afin par exemple de pouvoir changer la longueur d'onde du rayonnement laser par inclinaison variable du réseau sur l'axe de la cavité.

Le générateur laser suivant l'invention peut, grâce à sa robustesse, être monté avantageusement sur des matériels militaires et être appliqué à des systèmes de télémétrie ou de détection à distance.

## Revendications

1. Générateur laser guide d'onde, comportant

— une cavité optique résonnante disposée suivant un axe,
— un canal capillaire en céramique disposé coaxialement dans la cavité, ce canal étant obturé à ses extrémités et contenant un gaz actif laser,
— un réservoir du gaz actif en communication avec le canal,
— au moins deux électrodes en contact avec le gaz actif contenu dans le canal
— et un générateur de courant électrique dont les bornes peuvent être connectées aux électrodes pour exciter le gaz actif dans le canal et créer un faisceau laser sortant de la cavité,

caractérisé en ce que

— le réservoir comporte un tube cylindrique (1) en céramique obturé à ses extrémités, la surface cylindrique extérieure du tube (1) comportant un élément de surface aplati (2) s'étendant longitudinalement entre deux génératrices (3, 4) de cette surface cylindrique extérieure, cet élément (2) comportant extérieurement une première rainure (7) parallèle à l'axe du tube (1), une partie de la surface de cette première rainure (7) formant une partie de la surface interne du canal,
— et que le générateur comporte en outre

  . une réglette plate (8) en céramique comportant longitudinalement une deuxième rainure (11)
  . et des moyens (12) pour fixer de manière étanche au gaz la réglette (8) sur l'élément de surface aplati (2) du tube (1), de façon que la deuxième rainure (11) soit opposée à la première rainure (7) et forme l'autre partie de la surface interne du canal capillaire, au moins un orifice (17) étant ménagé à travers la paroi du tube (1) dans la première rainure (7) pour mettre en communication les volumes internes du canal et du tube (1).

2. Générateur selon la revendication 1, caractérisé en ce que le canal capillaire comporte deux réflecteurs (15, 16) obturant ses deux extrémités et formant la cavité optique résonnante, un de ces réflecteurs étant partiellement transparent.

3. Générateur selon la revendication 1, caractérisé en ce que le canal capillaire comporte un premier réflecteur (16) obturant une de ses extrémités et une fenêtre transparente (21) au rayonnement laser obturant l'autre extrémité du canal, et qu'il comporte un deuxième réflecteur disposé en dehors du canal suivant l'axe de la cavité et en regard de la fenêtre (21), les premier (16) et deuxième réflecteurs formant la cavité optique résonnante.

4. Générateur selon la revendication 3, caractérisé en ce que le deuxième réflecteur est un réseau de diffraction.

5. Générateur selon la revendication 3, caractérisé en ce que la fenêtre transparente (21) est inclinée sur l'axe à l'incidence de Brewster.

6. Générateur selon la revendication 1, caractérisé en ce que les moyens pour fixer la réglette (8) sur l'élément de surface aplati (2) du tube (1) comportent une brasure au verre (12).

7. Générateur selon la revendication 1, caractérisé en ce que le réservoir comporte en outre deux plaquette (13, 14) en céramique pour obturer les deux extrémités du tube (1).

8. Générateur selon la revendication 7, caractérisé en ce que les deux plaquettes (13, 14) en céramique sont fixées sur les extrémités (5, 6) du tube (1) par une brasure au verre.

9. Générateur selon la revendication 1, caractérisé en ce que les electrodes sont formées par deux tiges (18, 19) métalliques dont les extrémités sont fixées respectivement dans deux ouvertures (22) ménagées à travers la réglette (8) dans la deuxième rainure (11).

10. Générateur selon la revendication 1, caractérisé en ce que l'élément de surface aplati (2) s'étend longitudinalement au delà des extrémités (5, 6) tube (1).

## Patentansprüche

1. Wellenleiter-Lasgergenerator mit

— einem optischem Resonanzhohlraum, der entlang einer Achse angeordnet ist,
— einem Kapillarkanal aus Keramik, der koaxial in dem Hohlraum angeordnet ist, an seinen Enden verschlossen ist und ein aktives Lasergas enthält,
— einem mit dem Kanal in Verbindung stehenden Reservoir für das aktive Gas,
— mindestens zwei Elektroden in Kontakt mit dem im Kanal enthaltenen aktiven Gas,
— und einem elektrischen Stromgenerator, dessen Klemmen mit den Elektroden verbunden werden können, um das aktive Gas in dem Kanal zu erregen und ein aus dem Hohlraum heraustretendes Laserbündel zu erzeugen,

dadurch gekennzeichnet, daß

— das Reservoir ein zylindrisches Keramikrohr (1) aufweist, das an seinen Enden verschlossen ist und dessen zylindrische Außenoberfläche ein abgeflachtes Oberflächenelement (2) enthält, das sich in Längsrichtung zwischen zwei Mantellinien (3, 4) dieser zylindrischen Außenoberfläche erstreckt, wobei dieses Element (2) außen eine erste Nut (7) parallel zur Achse des Rohrs (1) enthält und ein Teil der Oberfläche dieser ersten Nut (7) einen Teil der inneren Oberfläche des Kanals bildet,
— und daß der Generator weiter

    . einen flachen Streifen (8) aus Keramik, der in Längsrichtung eine zweite Nut (11) aufweist,
    . und Mittel (12) aufweist, um den Streifen (8) gasdicht auf dem Element mit abgeflachter Oberfläche (2) des Rohrs (1) zu befestigen, so daß die zweite Nut (11) der ersten Nut (7) gegenüberliegt und den anderen Teil der inneren Oberfläche des Kapillarkanals bildet, wobei mindestens eine Öffnung (17) in der Wand des Rohrs in der ersten Nut (7) angebracht ist, um die inneren Volumen des Kanals und des Rohrs (1) miteinander in Verbindung zu bringen.

2. Generator nach Anspruch 1, dadurch gekennzeichnet, daß der Kapillarkanal zwei Reflektoren (15, 16) aufweist, die seine beiden Enden verschließen und den optischen Resonanzhohlraum bilden, wobei einer dieser Reflektoren semitransparent ist.

3. Generator nach Anspruch 1, dadurch gekennzeichnet, daß der Kapillarkanal einen ersten Reflektor (16) aufweist, der eines seiner Enden verschließt, und ein laserstrahlendurchlässiges Fenster (21), das das andere Ende des Kanals verschließt, und daß er einen zweiten Reflektor aufweist, der außerhalb des Kanals entlang der Achse des Hohlraums und gegenüber dem Fenster (21) angeordnet ist, wobei der erste (16) und der zweite Reflektor den optischen Resonanzhohlraum bilden.

4. Generator nach Anspruch 3, dadurch gekennzeichnet, daß der zweite Reflektor ein Diffraktionsnetz ist.

5. Generator nach Anspruch 3, dadurch gekennzeichnet, daß das transparente Fenster (21) zur Achse gemäß dem Brewster-Einfallswinkel geneigt ist.

6. Generator nach Anspruch 1, dadurch gekennzeichnet, daß die Mittel zur Befestigung des Streifens (8) auf dem abgeflachten Oberflächenelement (2) des Rohrs (1) eine Glaslötung (12) aufweisen.

7. Generator nach Anspruch 1, dadurch gekennzeichnet, daß der Behälter außerdem zwei Keramikplatten (13, 14) aufweist, um die beiden Enden des Rohrs (1) zu verschließen.

8. Generator nach Anspruch 7, dadurch gekennzeichnet, daß die beiden Keramikplatten (13, 14) durch eine Glaslötung auf den Enden (5, 6) des Rohrs (1) befestigt sind.

9. Generator nach Anspruch 1, dadurch gekennzeichnet, daß die Elektroden von zwei Metallstangen (18, 19) gebildet werden, deren Enden je in einer von zwei Öffnungen (22) befestigt sind, die durch den Streifen (8) hindurch in der zweiten Nut (11) führen.

10. Generator nach Anspruch 1, dadurch gekennzeichnet, daß das abgeflachte Oberflächenelement (2) sich in Längsrichtung über die Enden (5, 6) des Rohrs (1) hinaus erstreckt.

## Claims

1. A waveguide laser generator, comprising

— a resonant optical cavity disposed along an axis,
— a ceramic capillary channel disposed coaxially in the cavity, said channel being closed at its ends and containing a laser active gas,
— a supply of laser active gas in communication with said channel,
— at least two electrodes in contact with the active gas contained in said channel,
— and an electric current generator with terminals connectable to said electrodes in order to excite the active gas in the channel and to create a laser beam which leaves said cavity,
characterized in that
— the supply comprises a cylindrical tube (1) with closed ends, the cylindrical outside surface of said tube (1) having a flattened surface element (2) extending longitudinally between two generatrix lines (3, 4) of said cylindrical outside surface, said element (2) having outwardly a first groove (7) running parallel to the axis of the tube (1), a portion of the surface of said first groove (7) constituting a part of the inside surface of the channel,
— and in that the generator further includes:

. a flat ceramic strip (8) having a longitudinally extending second groove (11),
. and means (12) for fixing the strip (8) in gas-tight manner on the flattened surface element (2) of the tube (1) in such a manner that said second groove (11) faces said first groove (7) and constitutes the other part of the inside surface of the capillary channel, there being at least one opening (17) from said first groove (7) through the wall of the supply tube (1) to put the inside volumes of the supply tube (1) and of the capillary channel in communication.

2. A generator according to claim 1, characterized in that the capillary channel comprises two reflectors (15, 16) closing both ends thereof and constituting said optical resonant cavity, one of these reflectors being partially transparent.

3. A generator according to claim 1, characterized in that the capillary channel comprises a first reflector (16) closing one of its ends, a window (21) which is transparent to the laser radiation closing the other end of the channel, and that it comprises a second reflector disposed on the axis of the resonant cavity and outside the channel facing said window (21), said first (16) and second reflectors defining said optical resonant cavity.

4. A generator according to claim 3, characterized in that the second reflector is a diffraction grating.

5. A generator according to claim 3, characterized in that said transparent window (21) is inclined with respect to the axis according to the Brewster angle.

6. A generator according to claim 1, characterized in that said strip (8) is fixed to said flattened surface element (2) of the tube (1) by glass brazing (12).

7. A generator according to claim 1, characterized in that the supply further includes two ceramic plates (13, 14) closing both ends of the tube (1).

8. A generator according to claim 7, characterized in that the two ceramic plates (13, 14) are fixed to the ends (5, 6) of the tube (1) by glass brazing.

9. A generator according to claim 1, characterized in that the electrodes are constituted by two metal rods (18, 19) received in respective openings (22) through the strip (8) in the second groove (11).

10. A generator according to claim 1, characterized in that said flattened surface element (2) extends longitudinally beyond the ends (5, 6) of the tube (1).

FIG.1

FIG.2

FIG.4

FIG.3

# FIG.5

0 085 948